(19) Europäisches Patentamt
European Patent Office
Office européen des brevets

(11) **EP 3 245 117 B1**

(12) # FASCICULE DE BREVET EUROPEEN

(45) Date de publication et mention
de la délivrance du brevet:
**26.06.2019   Bulletin 2019/26**

(21) Numéro de dépôt: **16702189.8**

(22) Date de dépôt: **14.01.2016**

(51) Int Cl.:
***B62D 15/02*** (2006.01)      ***G06T 7/00*** (2017.01)

(86) Numéro de dépôt international:
**PCT/FR2016/050059**

(87) Numéro de publication internationale:
**WO 2016/113504 (21.07.2016 Gazette 2016/29)**

(54) **PROCEDE ET DISPOSITIF D'AIDE A LA MANOEUVRE EN MARCHE ARRIERE D'UN VEHICULE AUTOMOBILE**

VERFAHREN UND VORRICHTUNG ZUR UNTERSTÜTZUNG EINES UMKEHRMANÖVERS EINES KRAFTFAHRZEUGS

METHOD AND DEVICE TO ASSIST WITH THE REVERSAL MANOEUVRE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2015   FR 1550369**

(43) Date de publication de la demande:
**22.11.2017   Bulletin 2017/47**

(73) Titulaire: **Renault S.A.S.**
**92100 Boulogne-Billancourt (FR)**

(72) Inventeur: **AMBROISE, Stéphanie**
**78140 Velizy (FR)**

(56) Documents cités:
**FR-A1- 2 979 299        JP-A- 2014 004 930**
**US-A1- 2009 021 396      US-A1- 2010 329 510**
**US-A1- 2012 016 555      US-A1- 2013 265 442**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE AUQUEL SE RAPPORTE L'INVENTION

La présente invention concerne de manière générale les aides au conducteur d'un véhicule automobile.

Elle concerne plus particulièrement un procédé d'aide à la manoeuvre en marche arrière d'un véhicule automobile qui est équipé d'une caméra de recul et d'un écran d'affichage adapté à afficher les images acquises par la caméra de recul, ce procédé comportant :

- une étape d'acquisition d'un angle de braquage avant relatif à l'angle d'orientation du volant du véhicule automobile,
- une étape de calcul d'un gabarit dynamique représentatif de la trajectoire prévisible du véhicule automobile en marche arrière, en fonction dudit angle de braquage avant, et
- une étape d'affichage dudit gabarit dynamique sur l'écran d'affichage, en superposition des images acquises par la caméra de recul.

Elle concerne également un dispositif d'aide à la manoeuvre en marche arrière d'un véhicule automobile, comportant :

- un moyen d'acquisition d'un angle de braquage avant relatif à l'angle d'orientation du volant du véhicule automobile,
- une caméra de recul,
- un écran d'affichage adapté à afficher les images acquises par la caméra de recul, et
- un calculateur adapté à calculer un gabarit dynamique représentatif de la trajectoire prévisible du véhicule automobile, et à afficher ledit gabarit dynamique en superposition des images acquises par la caméra de recul.

ARRIERE-PLAN TECHNOLOGIQUE

Actuellement, certains véhicules automobiles sont équipés de caméras de recul, c'est-à-dire de caméras placées à l'arrière du véhicule et orientées vers l'arrière.

Une telle caméra de recul est généralement connectée à un écran situé sur le tableau de bord du véhicule de manière à afficher, lorsque le conducteur du véhicule engage la marche arrière, une image de l'environnement arrière du véhicule.

Sur cette image, il est d'usage de superposer deux calques appelés gabarit statique et gabarit dynamique.

Le gabarit statique comporte généralement deux lignes qui s'étendent depuis l'arrière du véhicule, sur une longueur donnée (par exemple 3 mètres), et qui représentent les trajectoires des deux roues arrière du véhicule si ce dernier reculait avec un angle au volant nul.

Le gabarit dynamique comporte généralement deux arcs-de-cercles qui s'étendent depuis l'arrière du véhicule, sur une longueur donnée (par exemple 3 mètres), et qui représentent les trajectoires prévisibles des deux roues arrière du véhicule compte tenu de l'angle d'orientation du volant.

Ces deux gabarits sont ainsi destinés à aider le conducteur à se garer en marche arrière et notamment à apprécier la distance dont il dispose pour se garer.

Généralement, ces gabarits sont mémorisés sous formes de fichiers images. Ainsi est-il connu de mémoriser, dans la mémoire morte du calculateur du système d'affichage, une image du gabarit statique et une centaine d'images de gabarits dynamiques (correspondant à une centaine d'angles de volant).

La taille de ces fichiers images se trouve être très volumineuse, ce qui nécessite de prévoir un calculateur comportant une mémoire de taille suffisante pour mémoriser toutes ces images.

Un inconvénient majeur de ce dispositif est que, étant donnée la taille des fichiers images, ces derniers ne peuvent pas être mis en mémoire dans le calculateur lors de la fabrication sur chaîne d'assemblage du véhicule automobile. Le véhicule reste en effet présent sur chaque poste de la chaine d'assemblage pendant une durée qui est trop réduite pour permettre au calculateur de mémoriser toutes ces images.

Un autre inconvénient est que, à chaque modification d'un paramètre du système d'affichage (changement de caméra de recul, modification de la position de la caméra de recul...), les images doivent être régénérées puis réimplantées dans la mémoire du calculateur, ce qui s'avère en pratique onéreux et difficile à mettre en oeuvre, notamment en service après-vente.

On connaît du document US20010026317 un dispositif d'aide à la manoeuvre tel que défini en introduction, dans lequel le calculateur est adapté à calculer le gabarit dynamique point par point, compte tenu de l'angle d'orientation du volant et de la position de la caméra sur le véhicule.

L'avantage est alors que le calculateur n'a alors plus à mémoriser des fichiers images pour commander l'affichage sur l'écran du gabarit dynamique.

L'inconvénient de ce dispositif est qu'il ne fonctionne pas pour tous les véhicules automobiles.

Le document US2009/021396, qui est considéré comme l'art antérieur le plus proche selon le préambule de la revendication 1, divulgue un procédé permettant d'afficher sur un écran les images acquises par une caméra de recul d'un véhicule. Ce procédé prévoit d'afficher en superposition de ces images des courbes illustrant la trajectoire du véhicule et des lignes permettant au conducteur de connaître la distance entre l'arrière du véhicule et d'éventuels obstacles. Les formes des courbes sont déterminées en fonction de la vitesse du véhicule. Le véhicule automobile ne comporte pas quatre roues directrices.

L'inconvénient de ce procédé est qu'il ne peut pas être appliqué de manière transverse à tout type de véhicule et qu'il ne prend pas en compte les quatre roues directrices d'un véhicule dans le calcul de la trajectoire

OBJET DE L'INVENTION

Afin de remédier à l'inconvénient précité de l'état de la technique, la présente invention propose un procédé tel que défini dans l'introduction, dans lequel il est prévu une étape d'acquisition de la vitesse du véhicule automobile et dans lequel ledit gabarit dynamique est calculé en fonction également de la vitesse du véhicule automobile.

La demanderesse a observé que la vitesse en marche arrière du véhicule pouvait avoir une incidence sur la trajectoire du véhicule.

C'est notamment le cas lorsque le véhicule est équipé de quatre roues directrices, puisque l'angle de braquage des roues arrière est alors commandé en fonction non seulement de l'angle d'orientation du volant mais aussi de la vitesse du véhicule automobile.

C'est également le cas lorsque le véhicule est équipé de deux roues directrices et que l'angle de braquage de ces roues est commandé en fonction de l'angle d'orientation du volant et de la vitesse du véhicule automobile.

Ainsi, grâce à l'invention, le procédé peut être utilisé sur tous les véhicules automobiles, quelles que soient leurs architectures.

D'autres caractéristiques avantageuses et non limitatives du procédé conforme à l'invention sont les suivantes :

- il est prévu une étape de lecture d'un indicateur relatif au nombre de roues directrices du véhicule automobile et ledit gabarit dynamique est calculé en fonction également dudit indicateur ;
- le véhicule automobile comportant quatre roues directrices, il est prévu une étape de calcul, en fonction de la vitesse du véhicule automobile, d'un angle de braquage arrière relatif à l'angle d'orientation des roues arrière du véhicule automobile, et le gabarit dynamique est calculé en fonction dudit angle de braquage arrière ;
- ledit gabarit dynamique est calculé en fonction d'une constante d'étalonnage longitudinale et d'une constante d'étalonnage transversale, dont les valeurs peuvent être modifiées en service après-vente pour recaler le gabarit dynamique respectivement dans une direction longitudinale et dans une direction transversale par rapport au véhicule automobile ;
- le calcul du gabarit dynamique comporte une opération de détermination d'un gabarit initial dans un plan d'appui du véhicule automobile sur le sol, suivie d'une opération de changement de repère dudit gabarit initial afin d'en déduire la forme d'un gabarit intermédiaire dans un plan sensiblement confondu avec le plan focal de la caméra de recul ;
- le plan focal de la caméra de recul étant incliné d'un angle de roulis, d'un angle de tangage et d'un angle de lacet par rapport audit plan d'appui, ladite opération de changement de repère est réalisée en fonction de chaque angle de roulis, de tangage et de lacet ;
- la caméra de recul induisant une distorsion des images acquises caractérisée par des paramètres de distorsion, le calcul du gabarit dynamique comporte une opération de distorsion dudit gabarit intermédiaire en fonction desdits paramètres de distorsion ;
- ladite opération de distorsion est opérée point par point, pour chaque pixel de l'écran d'affichage.

L'invention propose également un dispositif tel que défini dans l'introduction, dans lequel il est prévu un moyen d'acquisition de la vitesse du véhicule automobile et dans lequel le calculateur est adapté à mettre en oeuvre un procédé d'aide à la manoeuvre tel que précité.

L'invention concerne aussi un véhicule automobile comportant deux roues avant directrices, deux roues arrière également directrices, et un dispositif d'aide à la manoeuvre tel que précité.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique de dessus d'un véhicule automobile équipé de deux roues avant directrices, à l'arrière duquel est représentée une image d'un gabarit statique et d'un gabarit dynamique ;
- la figure 2 est une vue schématique de dessus d'un véhicule automobile équipé de quatre roues directrices, à l'arrière duquel est représentée une image d'un gabarit statique et d'un gabarit dynamique ;
- la figure 3 est une vue schématique d'un écran affichant une image déformée du gabarit statique et du gabarit dynamique représentés sur les figures 1 et 2 ; et
- la figure 4 est une vue schématique d'un écran affichant une image distordue du gabarit statique et du gabarit dynamique représentés sur la figure 3.

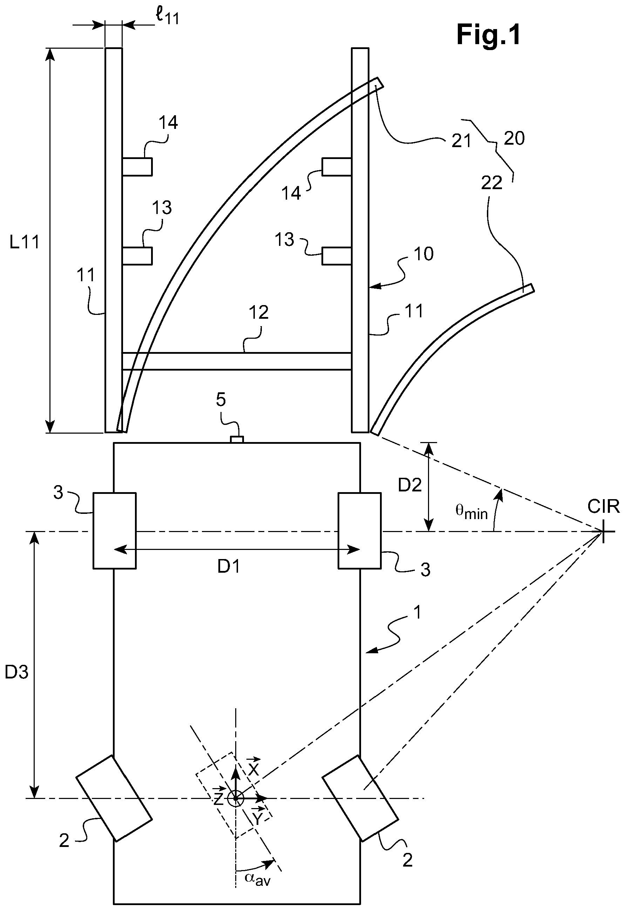

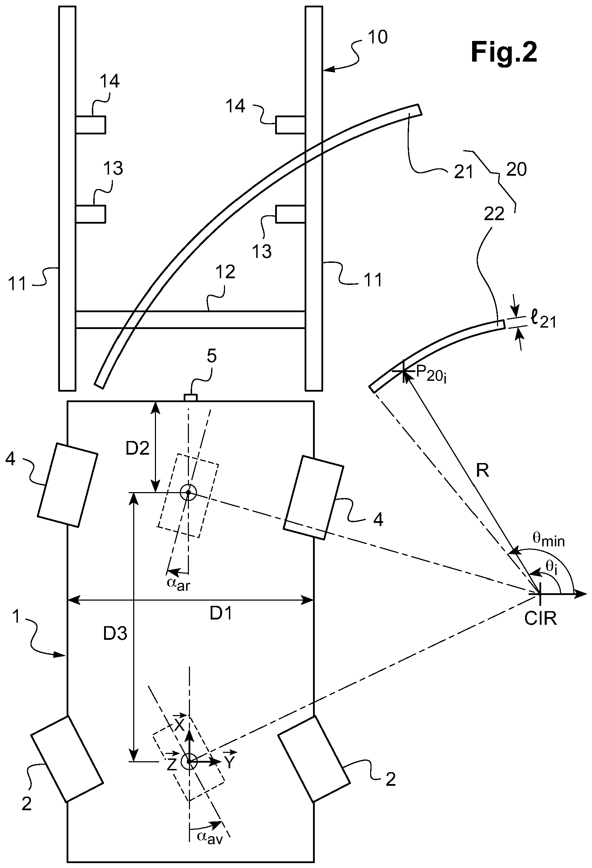

Sur les figures 1 et 2, on a représenté, vus de dessus, deux modes de réalisation d'un véhicule automobile 1.

Classiquement, ce véhicule automobile 1 comporte un châssis qui délimite un habitacle pour le conducteur du véhicule. Il comporte également quatre roues, un moteur d'entraînement des roues motrices, et un volant permettant de commander l'orientation des roues directrices vers la droite ou vers la gauche.

Dans le mode de réalisation de la figure 1, le véhicule automobile 1 comporte deux roues avant 2 directrices et deux roues arrière 3 non directrices (c'est-à-dire qui ne participent pas à la direction du véhicule automobile 1 vers la droite ou vers la gauche).

Dans le mode de réalisation de la figure 2, le véhicule automobile comporte deux roues avant 2 directrices et deux roues arrière 4 également directrices. A basse vitesse, l'utilisation de quatre roues directrices permet de réduire le rayon de braquage du véhicule automobile 1.

A ce stade, on peut définir un repère $(O, \vec{X}, \vec{Y}, \vec{Z})$ attaché au véhicule automobile 1. Ici, le repère considéré est un repère orthonormé dont l'origine O est située au centre de l'essieu avant du véhicule automobile 1, dont l'axe longitudinal $\vec{X}$ est orienté vers l'arrière du véhicule automobile, dont l'axe transversal $\vec{Y}$ est orienté vers la gauche du véhicule automobile et dont l'axe vertical $\vec{Z}$ est orienté vers le haut.

Dans ses deux modes de réalisation, le véhicule automobile 1 est équipé d'une caméra de recul 5 et d'un écran d'affichage 30 adapté à afficher des images acquises par la caméra de recul 5.

La caméra de recul 5 est disposée à l'arrière du châssis, par exemple au-dessus de la plaque d'immatriculation du véhicule, de telle sorte que son objectif débouche à l'extérieur du véhicule et est globalement orienté vers l'arrière et vers le bas.

Plus précisément, la caméra de recul 5 présente un axe optique qui est incliné :

- par rapport au plan $(\vec{X}, \vec{Y})$ vers le bas, d'un angle de tangage non nul (supérieur à 5 degrés),
- par rapport au plan $(\vec{X}, \vec{Z})$ vers la gauche ou vers la droite, d'un angle de lacet qui peut ou non être nul (qui est ici inférieur à 10 degrés), et
- autour de l'axe longitudinal $\vec{X}$, d'un angle de roulis qui peut ou non être nul (qui est ici inférieur à 10 degrés).

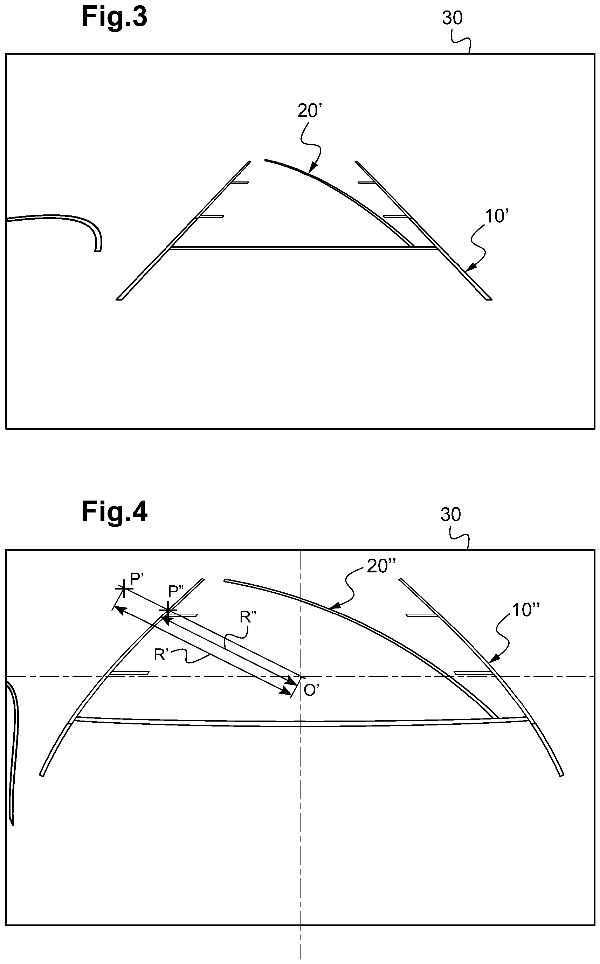

L'écran d'affichage 30 (représenté sur les figures 3 et 4) est quant à lui placé dans l'habitacle du véhicule automobile 1, par exemple sur la planche de bord de ce dernier. Il permet donc au conducteur de voir les images acquises par la caméra de recul 5.

Pour piloter les différents appareils audiovisuels embarqués dans le véhicule automobile 1, notamment la caméra de recul 5 et l'écran d'affichage 30, il est prévu un calculateur comportant un processeur, une mémoire vive, une mémoire morte, des convertisseurs analogiques-numériques, et différentes interfaces d'entrée et de sortie.

Grâce à ses interfaces d'entrée, le calculateur est adapté à recevoir de différents capteurs des signaux d'entrée. Grâce à ses convertisseurs analogiques-numériques, les signaux reçus par le calculateur sont échantillonnés et numérisés.

Dans sa mémoire vive, le calculateur mémorise ainsi en continu :

- l'image (instantanée) acquise par la caméra de recul 5,
- le rapport de vitesse engagé par le conducteur du véhicule,
- l'angle d'orientation (instantané) du volant, et
- la vitesse V (instantanée) du véhicule.

Grâce à un logiciel mémorisé dans sa mémoire morte, le calculateur est adapté à générer, pour chaque condition de fonctionnement du véhicule, des signaux de sortie.

Enfin, grâce à ses interfaces de sortie, le calculateur est adapté à transmettre ces signaux de sortie aux appareils audiovisuels embarqués dans le véhicule automobile 1, notamment à la caméra de recul 5 et à l'écran d'affichage 30.

Le calculateur est alors adapté à mettre en oeuvre un procédé d'aide à la manoeuvre en marche arrière du véhicule automobile 1.

Ce procédé est mis en oeuvre dès lors que le rapport de vitesse engagé par le conducteur est la marche arrière.

Ce procédé consiste à afficher, en superposition des images acquises par la caméra de recul 5, un gabarit dynamique ainsi qu'éventuellement aussi un gabarit statique.

Sur les figures 1 et 2, on a représenté des images de ces gabarits statique 10 et dynamique 20, vus dans un plan parallèle au plan de la route sur laquelle évolue le véhicule automobile 1 (ici dans le plan (0, $\vec{X}$, $\vec{Y}$)).

Le gabarit statique 10 est une figure géométrique qui permet au conducteur d'appréhender l'espace libre à l'arrière du véhicule automobile 1. Cette figure géométrique présente une forme invariable, quel que soit l'angle d'orientation du volant.

Le gabarit dynamique 20 est une figure géométrique qui permet au conducteur d'appréhender la trajectoire prévisible que va emprunter le véhicule automobile 1 lorsqu'il reculera. Cette figure géométrique présente une forme qui varie en fonction au moins de l'angle d'orientation du volant.

Ici, le gabarit dynamique 20 présente une forme qui est calculée à chaque instant (et qui n'est donc pas lue dans un registre de base de données).

Selon une caractéristique particulièrement avantageuse de l'invention, il est prévu de calculer la forme de ce gabarit dynamique 20 en fonction non seulement de l'angle d'orientation du volant mais aussi de la vitesse V du véhicule automobile 1.

Pour résumé, le procédé d'aide à la manoeuvre mis en oeuvre par le calculateur comporte alors :

- une étape d'acquisition d'un angle de braquage avant $\alpha_{av}$, qui est relatif à l'angle d'orientation du volant,
- une étape d'acquisition de la vitesse V du véhicule automobile 1,
- une étape de détermination de la forme du gabarit dynamique initial 20 (« initial » car vu dans le plan (0, $\vec{X}$, $\vec{Y}$)) en fonction dudit angle de braquage avant $\alpha_{av}$ et de la vitesse V du véhicule automobile 1,
- une étape de détermination de la forme d'un gabarit dynamique intermédiaire 20' correspondant au projeté, dans le plan focal de la caméra de recul 5, du gabarit dynamique initial 20,
- une étape de détermination de la forme d'un gabarit dynamique définitif 20" obtenu en déformant le gabarit dynamique intermédiaire 20' conformément à la distorsion des images acquises par la caméra de recul 5, et
- une étape d'affichage de ce gabarit dynamique définitif 20" sur l'écran d'affichage 30, en superposition des images acquises par la caméra de recul 5.

Plus en détail maintenant, le calculateur met en oeuvre l'algorithme suivant.

Au cours d'une première étape, le calculateur lit dans sa mémoire morte ou dans sa mémoire vive un fichier dans lequel est mémorisée la forme du gabarit statique initial 10.

Si ce fichier n'existe pas encore, le calculateur procède au calcul de la forme de ce gabarit statique initial 10.

Ici, comme le montrent les figures 1 et 2, ce gabarit statique initial 10 comporte deux droites 11 parallèles et épaisses, qui s'étendent parallèlement à l'axe longitudinal $\vec{X}$ du véhicule automobile 1, vers l'arrière, sur une longueur prédéterminée (par exemple 3 mètres). Elle sont écartées l'une de l'autre d'une distance correspondant à la distance séparant les roues arrière 3, 4 du véhicule automobile 1, si bien qu'elles indiquent les trajectoires qu'emprunteraient ces roues arrière 3, 4 si le véhicule reculait alors que l'angle d'orientation du volant était nul.

Le gabarit statique 10 comporte en outre une droite transversale 12 qui s'étend orthogonalement aux deux droites 11, entre ces deux droites 11, à une distance de l'arrière du véhicule qui est paramétrable (typiquement 30 centimètres).

Il comporte également deux premiers segments coaxiaux 13 qui s'étendent parallèlement à la droite transversale 12, à une distance de celle-ci qui est paramétrable (typiquement 45 centimètres). Ces deux premiers segments coaxiaux 13 s'étendent à partir des deux droites 11, en direction l'un de l'autre.

Il comporte enfin deux seconds segments coaxiaux 14 qui s'étendent parallèlement à la droite transversale 12, à une distance de celle-ci qui est paramétrable (typiquement 150 centimètres). Ces deux seconds segments coaxiaux 14 s'étendent à partir des deux droites 11, en direction l'un de l'autre.

Les coordonnées $(X_{10}, Y_{10})$ des points $P_{10}$ de ce gabarit statique initial 10, dans le plan (0, $\vec{X}$, $\vec{Y}$), sont donc soit lus dans un registre mémorisé par le calculateur, soit calculés par le calculateur.

Ce calcul est réalisé de manière incrémentielle, en tenant compte de l'empattement D3 du véhicule, de la distance D1 séparant les deux roues arrière 3 du véhicule et du porte-à-faux arrière D2 de ce véhicule (voir figure 1).

Ce calcul incorpore une constante d'étalonnage longitudinale $c_x$ et une constante d'étalonnage transversale $c_y$, dont les valeurs peuvent être modifiées en service après-vente pour recaler le gabarit statique 10 respectivement selon l'axe longitudinal $\vec{X}$ et selon l'axe transversal $\vec{Y}$ du véhicule automobile 1. En effet, il peut arriver, pour une raison ou pour une autre (par exemple en cas d'accident), que la caméra de recul 5 ait bougée ou ait été remplacée, auquel cas il pourra être nécessaire de ré-étalonner le dispositif de manière que les gabarits statique et dynamique 10, 20 se superposent bien aux images acquises par la caméra de recul 5.

A titre illustratif, les coordonnées $(X_{10}, Y_{10})$ des points $P_{10}$ de l'une des deux lignes 11 du gabarit statique initial 10 peuvent être calculées au moyen des formules suivantes :

$$X_{10} = D2 + D3 + L_{11} \cdot i / N + c_x,$$

avec i variant de 1 à N

$$Y_{10} = D1 / 2 - \ell_{11} + \ell_{11} \cdot j / M + c_y,$$

avec j variant de 1 à M

Dans ces deux équations, $L_{11}$ correspond à la longueur de la ligne 11, $\ell_{11}$ correspond à la largeur de cette ligne 11, N correspond au nombre de points $P_{10}$ s'étendant en longueur sur la ligne 11, M correspond au nombre de points $P_{10}$ s'étendant en largeur sur la ligne 11.

Une fois ce gabarit statique initial 10 lu ou calculé, le calculateur procède au calcul du gabarit dynamique initial 20.

Comme le montrent les figures 1 et 2, le gabarit dynamique initial 20 comporte ici deux courbes 21, 22.

Ces deux courbes 21, 22 se présentent sous la forme de deux arcs-de-cercles épais, centrés autour d'un même point (qui forme un centre instantané de rotation CIR).

Ces deux courbes 21, 22 sont écartées l'une de l'autre d'une distance correspondant à la distance séparant les roues arrière 3, 4 du véhicule automobile 1, si bien qu'elles indiquent les trajectoires qu'emprunteraient ces roues arrière 3, 4 si le véhicule reculait avec un angle d'orientation du volant constant.

On remarque sur les figures 1 et 2 que, selon que le véhicule automobile 1 comportera deux ou quatre roues directrices, la position du centre instantané de rotation CIR ne sera pas la même.

Le dispositif étant susceptible d'être intégré à tout type de véhicule automobile, préalablement au calcul du gabarit dynamique initial 20, le calculateur lit dans sa mémoire morte un indicateur relatif au nombre de roues directrices du véhicule automobile 1.

A titre d'exemple, si cet indicateur est égal à 0, le calculateur déduit que le véhicule comporte deux roues directrices, qui sont les deux roues avant 2 (cas de la figure 1).

Au contraire, si cet indicateur est égal à 1, le calculateur déduit que le véhicule comporte quatre roues directrices (cas de la figure 2).

Le gabarit dynamique initial 20 est alors calculé en fonction de cet indicateur.

Considérons tout d'abord le cas de la figure 1 où le calculateur déduit que le véhicule comporte deux roues directrices, à savoir les deux roues avant 2.

Dans ce cas, on considère alors que le centre instantané de rotation CIR est situé à l'intersection de :

- l'axe de l'essieu arrière, et
- l'axe qui passe par le centre de l'essieu avant et qui s'étend perpendiculairement aux plans moyens des roues avant 2.

Dans ce cas, on fait donc l'approximation que les roues arrière 3 vont tourner autour de ce centre instantané de rotation CIR.

Pour calculer la forme du gabarit statique initial 20, le calculateur commence alors par acquérir l'angle de braquage $\alpha_{av}$ des roues avant 2 du véhicule automobile 1.

Cet angle de braquage $\alpha_{av}$ est ici déduit uniquement de l'angle d'orientation du volant.

Il est obtenu à l'aide d'un abaque donnant l'angle de braquage $\alpha_{av}$ en fonction de l'angle d'orientation du volant. En variante, il peut être obtenu autrement, par exemple à l'aide d'un polynôme donnant l'angle de braquage $\alpha_{av}$ en fonction de l'angle d'orientation du volant.

Quoi qu'il en soit, le calculateur détermine ensuite les coordonnées $(X_{20}, Y_{20})$ des points $P_{20}$ du gabarit dynamique initial 20, dans le plan $(0, \vec{X}, \vec{Y})$. Ces coordonnées sont calculées de manière incrémentielle.

Ce calcul incorpore également une constante d'étalonnage longitudinale $c_x$ et une constante d'étalonnage transversale $c_y$, dont les valeurs peuvent être modifiées en service après-vente pour recaler le gabarit dynamique initial 20 si un décalage était constaté.

A titre illustratif, les coordonnées $(X_{20}, Y_{20})$ des points $P_{20}$ de l'une des deux courbes 21 du gabarit dynamique initial 20 peuvent être calculées au moyen des formules suivantes :

$$X_{20} = (R - D1 / 2) . \sin (D2 / R + \theta_{min}) + D3 + R_j . \sin \theta_i + c_x$$

$$Y_{20} = - (R - (R - D1 / 2) . \cos(D2 / R + \theta_{min})) + R_j . \cos \theta_i + c_y$$

Dans ces deux équations, R correspond au rayon séparant la roue arrière 3 considérée du centre instantané de rotation CIR, $\theta_{min}$ correspond à l'angle minimum à partir duquel on commence à tracer la courbe 21.

Par ailleurs, on fait varier l'angle $\theta_i$ entre l'angle $\theta_{min}$ et un angle $\theta_{max}$ défini en fonction de la longueur d'arc-de-cercle que l'on souhaite afficher. On fait également varier le paramètre $R_j$ en fonction de l'épaisseur du trait $\ell_{21}$ de la courbe 21. Ces deux paramètres peuvent ainsi être définis :

$$\theta_i = \theta_{min} + (\theta_{max} - \theta_{min}) . i / N$$

$$R_j = - \ell_{21} + 2 . \ell_{21} . j / M$$

Considérons maintenant le cas de la figure 2 où le véhicule comporte quatre roues directrices.

Dans ce cas, on considère alors que le centre instantané de rotation CIR est situé à l'intersection de :

- l'axe qui passe par le centre de l'essieu arrière et qui s'étend perpendiculairement aux plans moyens des roues arrière 4, et
- l'axe qui passe par le centre de l'essieu avant et qui s'étend perpendiculairement aux plans moyens des roues avant 2.

Dans ce cas, on fait donc l'approximation que les roues arrière 4 vont tourner autour de ce centre instantané de rotation CIR.

Le calculateur commence par acquérir l'angle de braquage avant $\alpha_{av}$ des roues avant 2 du véhicule automobile 1, de la même manière que celle exposée précédemment.

Puis le calculateur acquiert l'angle de braquage arrière $\alpha_{ar}$ des roues arrière 4 du véhicule automobile 1.

Cet angle de braquage arrière $\alpha_{ar}$ peut être obtenu au moyen d'un abaque ou d'une fonction mathématique mémorisée dans la mémoire morte du calculateur.

Il est ici obtenu au moyen d'un abaque à deux entrées, qui fait correspondre à chaque intervalle de vitesse V du véhicule automobile 1 et à chaque intervalle d'angle d'orientation du volant un angle de braquage arrière $\alpha_{ar}$ des roues arrière 4.

On notera ici que les angles de braquage avant $\alpha_{av}$ et arrière $\alpha_{ar}$ correspondent respectivement aux angles que font les plans moyens des roues avant 2 et arrière 4 avec l'axe longitudinal $\vec{X}$ du véhicule automobile 1.

Puis le calculateur détermine la forme de chaque courbe 21, 22 du gabarit dynamique initial 20.

Les coordonnées $(X_{20}, Y_{20})$ des points $P_{20}$ de ce gabarit dynamique initial 20, dans le plan $(0, \vec{X}, \vec{Y})$, sont calculées de manière incrémentielle.

Ce calcul incorpore également une constante d'étalonnage longitudinale $c_x$ et une constante d'étalonnage transversale $c_y$, dont les valeurs peuvent être modifiées en service après-vente pour recaler le gabarit dynamique initial 20 si un décalage était constaté.

A titre illustratif, les coordonnées $(X_{20}, Y_{20})$ des points $P_{20}$ de l'une des deux courbes 21 du gabarit dynamique initial 20 peuvent être calculées au moyen des formules suivantes :

$$X_{20} = (R + D1 / 2 . \cos (- \alpha_{ar})) . \sin \theta_i + c_x + X_{cir}$$

$$Y_{20} = - (R + D1 / 2 . \cos (- \alpha_{ar})) . \cos \theta_i + c_y + Y_{cir}$$

Dans ces deux équations, $X_{cir}$ et $Y_{cir}$ sont les coordonnées du centre instantané de rotation CIR, et R correspond au rayon de braquage de la roue arrière 4 considérée. Les valeurs de ces paramètres peuvent être obtenues de la manière suivante :

$$X_{cir} = R \cdot \sin(\alpha_{ar}) + D3$$

$$Y_{cir} = R \cdot \cos(\alpha_{ar}) - D1 / 2$$

$$R = (D3 - R1 \cdot \sin(\alpha_{av})) / \sin(-\alpha_{ar})$$

Dans cette dernière équation, R1 correspond au rayon de braquage de la roue avant 2 située du côté de la roue arrière 4 considérée. Sa valeur peut être obtenue de la manière suivante :

$$R1 = D3 / (\sin(\alpha_{av}) \cdot (1 + (\tan(\alpha_{ar}) / \tan(\alpha_{av}))))$$

A ce stade, le calculateur a en mémoire les coordonnées de tous les points $P_{10}$, $P_{20}$ du gabarit statique initial 10 et du gabarit dynamique initial 20.

On comprend que, puisque la vue acquise par la caméra de recul 5 n'est pas une vue de dessus mais une vue arrière et de dessus, on ne peut pas superposer les gabarits statique et dynamique initiaux 10, 20 sur les images acquises par la caméra de recul 5.

Comme le montre la figure 3, il est au contraire nécessaire de tenir compte de la perspective en déformant ces gabarits statique et dynamique initiaux 10, 20.

Ce changement de perspective consiste en un calcul de changement de repères, permettant de définir les coordonnées des points des gabarits statique et dynamique intermédiaires 10', 20'.

Comme cela a été exposé supra, la caméra de recul 5 présente un axe optique qui est incliné :

- par rapport au plan $(\vec{X}, \vec{Y})$ vers le bas, d'un angle de tangage $\delta_{tangage}$ non nul,

- par rapport au plan $(\vec{X}, \vec{Z})$ vers la gauche ou vers la droite, d'un angle de lacet $\delta_{lacet}$ qui peut ou non être nul, et

- autour de l'axe longitudinal $\vec{X}$, d'un angle de roulis $\delta_{roulis}$ qui peut ou non être nul.

Cet axe optique est orthogonal au plan focal de la caméra de recul 5.

On définit alors les coordonnées ($X_{cam}$, $Y_{cam}$, $Z_{cam}$) du centre optique de la caméra de recul 5 dans le repère $(0, \vec{X}, \vec{Y}, \vec{Z})$ attaché au véhicule automobile 1.

On définit par ailleurs f comme étant la distance focale de la caméra.

On définit enfin un repère $(0, \vec{X'}, \vec{Y'}, \vec{Z'})$ attaché à la caméra de recul 5. Ici, le repère considéré est un repère orthonormé dont l'origine est située au point focal de la caméra de recul 5 et dont l'axe longitudinal $\vec{X'}$ est orienté selon l'axe optique de la caméra de recul 5.

Alors, on peut définir des matrices de changement de repères pour calculer les coordonnées (x, y, z) des points des gabarits statique et dynamique intermédiaires 10', 20' dans ce repère $(0, \vec{X'}, \vec{Y'}, \vec{Z'})$, en fonction des coordonnées (X, Y, Z) des points des gabarits statique et dynamique initiaux 10, 20.

Ainsi, la matrice de changement permettant de prendre en compte l'angle de tangage $\delta_{tangage}$ est la suivante :

$$\begin{pmatrix} X - Xcam \\ Y - Ycam \\ Z - Zcam \end{pmatrix} = \begin{pmatrix} \cos(\delta_{tangage}) & 0 & -\sin(\delta_{tangage}) \\ 0 & 1 & 0 \\ -\sin(\delta_{tangage}) & 0 & \cos(\delta_{tangage}) \end{pmatrix} \begin{pmatrix} -f \\ x \\ z \end{pmatrix}$$

La matrice de changement permettant de prendre en compte l'angle de lacet $\delta_{lacet}$ est la suivante :

$$\begin{pmatrix} X - Xcam \\ Y - Ycam \\ Z - Zcam \end{pmatrix} = \begin{pmatrix} \cos(\delta_{lacet}) & \sin(\delta_{lacet}) & 0 \\ -\sin(\delta_{lacet}) & \cos(\delta_{lacet}) & 0 \\ 0 & 0 & 1 \end{pmatrix} \begin{pmatrix} -f \\ y \\ z \end{pmatrix}$$

La matrice de changement permettant de prendre en compte l'angle de lacet $\delta_{roulis}$ est la suivante :

$$\begin{pmatrix} X - Xcam \\ Y - Ycam \\ Z - Zcam \end{pmatrix} = \begin{pmatrix} \cos(\delta_{\text{roulis}}) & 0 & -\sin(\delta_{\text{roulis}}) \\ 0 & 1 & 0 \\ -\sin(\delta_{\text{roulis}}) & 0 & \cos(\delta_{\text{roulis}}) \end{pmatrix} \begin{pmatrix} -f \\ y \\ z \end{pmatrix}$$

En combinant ces matrices et en les inversant, il est ainsi possible d'obtenir les coordonnées (x, y, z) des points des gabarits statique et dynamique intermédiaires 10', 20' dans le repère $(0, \overrightarrow{X'}, \overrightarrow{Y'}, \overrightarrow{Z'})$ attaché à la caméra de recul 5.

En ne tenant compte que des coordonnées planes (x, y) de ces points, il est ainsi possible de définir les images bidimensionnelles des gabarits statique et dynamique intermédiaires 10', 20', vus dans le plan focal de la caméra de recul 5 (voir figure 3).

Ces images sont alors maintenant superposables aux images acquises par la caméra de recul 5.

Toutefois, la caméra de recul étant de type « grand angle », elle déforme sensiblement les images qu'elle acquiert. Ce phénomène est qualifié de distorsion.

Ainsi, comme le montre la figure 4, un point P' qui devrait s'afficher sur l'image à un rayon R' du centre O' de l'image s'affiche, du fait des effets de distorsion, en un point P" situé à un rayon R" du centre O' de l'image.

Selon l'invention, il est alors prévu de distordre les gabarits statique et dynamique intermédiaire 20', de la même manière que les images acquises par la caméra de recul 5. Ainsi les gabarits statique et dynamique définitifs 20" obtenus pourront-ils être parfaitement superposés aux images acquises par la caméra de recul 5.

Généralement, le fournisseur de la caméra de recul 5 livre avec la caméra de recul 5 un tableau qui fait correspondre, à chaque angle d'incidence d'un rayon lumineux sur la caméra de recul 5 (mesuré par rapport à l'axe optique), un rayon R" correspondant à la distance entre le centre de l'image et le point de l'image où sera affiché le rayon lumineux.

Compte tenu du tableau livré par le fournisseur, il est possible de déterminer un polynôme d'interpolation qui fasse correspondre à angle d'incidence un rayon R" correspondant.

Il est alors prévu, grâce à ce polynôme d'interpolation, de corriger les coordonnées de tous les points de l'image des gabarits statique et dynamique intermédiaires 20' de manière à en déduire une image des gabarits statique et dynamique définitifs 20".

On notera que cette opération de distorsion est opérée point par point, pour chaque point considéré de l'écran d'affichage 30. Autrement formulé, cette opération consiste pour le calculateur à vérifier, pour chaque point considéré de l'écran d'affichage 30, si ce point correspond (via le polynôme d'interpolation) à un point des gabarits statique et dynamique intermédiaires 20'. Cette opération permet alors de reconstruire point par point les gabarits statique et dynamique définitifs 20".

L'image obtenue est ensuite pixélisée, de manière que chaque point des gabarits statique et dynamique définitifs 20" corresponde à un pixel particulier de l'écran d'affichage 30, ce qui permet de traiter un nombre réduit de données.

Elle est ensuite superposée à l'image acquise par la caméra de recul 5.

La présente invention est définie selon les revendications suivantes.

## Revendications

1. Procédé d'aide à la manoeuvre en marche arrière d'un véhicule automobile (1) qui est équipé d'une caméra de recul (5) et d'un écran d'affichage (30) adapté à afficher des images acquises par la caméra de recul (5), comportant :

   - une étape d'acquisition d'un angle de braquage avant ($\alpha_{av}$) relatif à l'angle d'orientation du volant du véhicule automobile (1),
   - une étape d'acquisition de la vitesse (V) du véhicule automobile (1)
   - une étape de calcul d'un gabarit dynamique (20") représentatif de la trajectoire prévisible du véhicule automobile (1), en fonction dudit angle de braquage avant ($\alpha_{av}$) et de la vitesse (V) du véhicule automobile (1), et
   - une étape d'affichage dudit gabarit dynamique (20") sur l'écran d'affichage (30), en superposition des images acquises par la caméra de recul (5),

   **caractérisé en ce que**, le véhicule automobile (1) comportant quatre roues directrices, le procédé comporte :

   - une étape de lecture d'un indicateur relatif au nombre de roues directrices du véhicule automobile (1), et
   - une étape de calcul, en fonction de la vitesse (V) du véhicule automobile (1), d'un angle de braquage arrière ($\alpha_{ar}$) relatif à l'angle d'orientation des roues arrière (4) du véhicule automobile (1), et

**en ce que** ledit gabarit dynamique (20") est calculé en fonction également dudit indicateur et dudit angle de braquage arrière ($\alpha_{ar}$).

2. Procédé d'aide à la manoeuvre selon la revendication précédente, dans lequel ledit gabarit dynamique (20") est calculé en fonction d'une constante d'étalonnage longitudinale et d'une constante d'étalonnage transversale, dont les valeurs peuvent être modifiées en service après-vente pour recaler le gabarit dynamique (20") respectivement dans une direction longitudinale et dans une direction transversale par rapport au véhicule automobile (1).

3. Procédé d'aide à la manoeuvre selon la revendication précédente, dans lequel le calcul du gabarit dynamique (20") comporte une opération de détermination d'un gabarit initial (20) dans un plan d'appui du véhicule automobile (1) sur le sol, suivie d'une opération de changement de repère dudit gabarit initial (20) afin d'en déduire la forme d'un gabarit intermédiaire (20') dans un plan sensiblement confondu avec le plan focal de la caméra de recul (5).

4. Procédé d'aide à la manoeuvre selon la revendication précédente, dans lequel, le plan focal de la caméra de recul (5) étant incliné d'un angle de roulis, d'un angle de tangage et d'un angle de lacet par rapport audit plan d'appui, ladite opération de changement de repère est réalisée en fonction de chaque angle de roulis, de tangage et de lacet.

5. Procédé d'aide à la manoeuvre selon l'une des deux revendications précédentes, dans lequel, la caméra de recul (5) étant **caractérisée par** des paramètres de distorsion des images acquises, le calcul du gabarit dynamique (20") comporte une opération de distorsion dudit gabarit intermédiaire (20') en fonction desdits paramètres de distorsion.

6. Procédé d'aide à la manoeuvre selon la revendication précédente, dans lequel ladite opération de distorsion est opérée point par point, pour chaque pixel de l'écran d'affichage (30).

7. Dispositif d'aide à la manoeuvre en marche arrière d'un véhicule automobile (1), comportant :

   - un moyen d'acquisition d'un angle de braquage avant ($\alpha_{av}$) relatif à l'angle d'orientation du volant du véhicule automobile (1),
   - une caméra de recul (5),
   - un écran d'affichage (30) adapté à afficher des images acquises par la caméra de recul (5), et
   - un calculateur adapté à calculer un gabarit dynamique (20") représentatif de la trajectoire prévisible du véhicule automobile (1), et à afficher ledit gabarit dynamique (20") en superposition des images acquises par la caméra de recul (5),

   **caractérisé en ce qu'**il comporte un moyen d'acquisition de la vitesse (V) du véhicule automobile et **en ce que** le calculateur est adapté à mettre en oeuvre un procédé d'aide à la manoeuvre selon l'une des revendications précédentes.

8. Véhicule automobile (1) comportant deux roues avant (2) directrices, deux roues arrière (4) également directrices, et un dispositif d'aide à la manoeuvre selon la revendication précédente.


**Patentansprüche**

1. Verfahren zur Unterstützung des Rückwärtsfahrmanövers eines Kraftfahrzeugs (1), das mit einer Rückfahrkamera (5) und einem Anzeigebildschirm (30) ausgestattet ist, der dazu ausgelegt ist, Bilder anzuzeigen, die durch die Rückfahrkamera (5) erfasst werden, das Folgendes umfasst:

   - einen Schritt zum Erfassen eines vorderen Einschlagwinkels ($\alpha_{av}$) in Bezug auf den Orientierungswinkel des Lenkrades des Kraftfahrzeugs (1),
   - einen Schritt zur Erfassung der Geschwindigkeit (V) des Kraftfahrzeugs (1),
   - einen Schritt zum Berechnen einer dynamischen Begrenzungslinie (20"), die die vorhersehbare Trajektorie des Kraftfahrzeugs (1) darstellt, in Abhängigkeit vom vorderen Einschlagwinkel ($\alpha_{av}$) und von der Geschwindigkeit (V) des Kraftfahrzeugs (1), und
   - einen Schritt zum Anzeigen der dynamischen Begrenzungslinie (20") auf dem Anzeigebildschirm (30) überlagert auf den durch die Rückfahrkamera (5) erfassten Bildern,

   **dadurch gekennzeichnet, dass** das Kraftfahrzeug (1) vier gelenkte Räder umfasst, wobei das Verfahren Folgendes umfasst:

- einen Schritt zum Lesen eines Indikators in Bezug auf die Anzahl von gelenkten Rädern des Kraftfahrzeugs (1), und
- einen Schritt zum Berechnen eines hinteren Einschlagwinkels ($\alpha_{ar}$) in Bezug auf den Orientierungswinkel der Hinterräder (4) des Kraftfahrzeugs (1) in Abhängigkeit von der Geschwindigkeit (V) des Kraftfahrzeugs (1), und

dass die dynamische Begrenzungslinie (20") auch in Abhängigkeit vom Indikator des hinteren Einschlagwinkels ($\alpha_{ar}$) berechnet wird.

2. Verfahren zur Unterstützung des Manövers nach dem vorangehenden Anspruch, wobei die dynamische Begrenzungslinie (20") in Abhängigkeit von einer longitudinalen Kalibrierungskonstante und einer transversalen Kalibrierungskonstante berechnet wird, deren Werte beim Kundendienst modifiziert werden können, um die dynamische Begrenzungslinie (20") in einer longitudinalen Richtung bzw. in einer transversalen Richtung in Bezug auf das Kraftfahrzeug (1) zu korrigieren.

3. Verfahren zur Unterstützung des Manövers nach dem vorangehenden Anspruch, wobei die Berechnung der dynamischen Begrenzungslinie (20") eine Operation zur Bestimmung einer anfänglichen Begrenzungslinie (20) in einer Standfläche des Kraftfahrzeugs (1) auf dem Boden, gefolgt von einer Operation zur Änderung des Bezugssystems der anfänglichen Begrenzungslinie (20), um daraus die Form einer Zwischenbegrenzungslinie (20') in einer Ebene abzuleiten, die mit der Brennebene der Rückfahrkamera (5) im Wesentlichen zusammenfällt, umfasst.

4. Verfahren zur Unterstützung des Manövers nach dem vorangehenden Anspruch, wobei dann, wenn die Brennebene der Rückfahrkamera (5) unter einem Rollwinkel, einem Nickwinkel und einem Gierwinkel in Bezug auf die Standfläche geneigt ist, die Operation zum Ändern des Bezugssystems in Abhängigkeit von jedem Rollwinkel, Nickwinkel und Gierwinkel ausgeführt wird.

5. Verfahren zur Unterstützung des Manövers nach einem der zwei vorangehenden Ansprüche, wobei dann, wenn die Rückfahrkamera (5) durch Verzerrungsparameter der erfassten Bilder bezeichnet ist, die Berechnung der dynamischen Begrenzungslinie (20") eine Operation zur Verzerrung der Zwischenbegrenzungslinie (20') in Abhängigkeit von den Verzerrungsparametern umfasst.

6. Verfahren zur Unterstützung des Manövers nach dem vorangehenden Anspruch, wobei die Operation der Verzerrung punktweise für jedes Pixel des Anzeigebildschirms (30) durchgeführt wird.

7. Vorrichtung zur Unterstützung des Rückwärtsfahrmanövers eines Kraftfahrzeugs (1), die Folgendes umfasst:

- ein Mittel zum Erfassen eines vorderen Einschlagwinkels ($\alpha_{av}$) in Bezug auf den Orientierungswinkel des Lenkrades des Kraftfahrzeugs (1),
- eine Rückfahrkamera (5),
- einen Anzeigebildschirm (30), der dazu ausgelegt ist, durch die Rückfahrkamera (5) erfasste Bilder anzuzeigen, und
- einen Rechner, der dazu ausgelegt ist, eine dynamische Begrenzungslinie (20") zu berechnen, die die vorhersehbare Trajektorie des Kraftfahrzeugs (1) darstellt, und die dynamische Begrenzungslinie (20") auf die durch die Rückfahrkamera (5) erfassten Bilder überlagert anzuzeigen,

**dadurch gekennzeichnet, dass** sie ein Mittel zur Erfassung der Geschwindigkeit (V) des Kraftfahrzeugs umfasst und dass der Rechner dazu ausgelegt ist, ein Verfahren zur Unterstützung des Manövers nach einem der vorangehenden Ansprüche auszuführen.

8. Kraftfahrzeug (1) mit zwei lenkbaren Vorderrädern (2), zwei ebenfalls lenkbaren Hinterrädern (4) und einer Vorrichtung zur Unterstützung des Manövers gemäß dem vorangehenden Anspruch.


**Claims**

1. Method to assist with the reversal maneuver of a motor vehicle (1) which is provided with a backup camera (5) and a display screen (30) suitable for displaying images acquired by the backup camera (5), comprising:

- a step of acquiring a front turning angle ($\alpha_{av}$) relative to the angle of orientation of the steering wheel of the motor vehicle (1),
- a step of acquiring the speed (V) of the motor vehicle (1),
- a step of calculating a dynamic gage (20") representative of the predictable trajectory of the motor vehicle (1), according to said front turning angle ($\alpha_{av}$) and to the speed (V) of the motor vehicle (1), and
- a step of displaying said dynamic gage (20") on the display screen (30), by superimposing the images acquired by the backup camera (5),

**characterized in that**, with the motor vehicle (1) comprising four steered wheels, the method comprises:

- a step of reading an indicator relating to the number of steered wheels of the motor vehicle (1), and
- a step of calculating, according to the speed (V) of the motor vehicle (1), a rear turning angle ($\alpha_{ar}$) relative to the angle of orientation of the rear wheels (4) of the motor vehicle (1), and

**in that** the dynamic gage (20") is calculated according both to said indicator and to said rear turning angle ($\alpha_{ar}$).

2. Method to assist with the maneuver according to the preceding claim, in which said dynamic gage (20") is calculated according to a longitudinal calibration constant and a transverse calibration constant, the values of which may be modified in after-sales service for resetting the dynamic gage (20") in a longitudinal direction and in a transverse direction respectively with respect to the motor vehicle (1).

3. Method to assist with the maneuver according to the preceding claim, in which the calculation of the dynamic gage (20") comprises an operation of determining an initial gage (20) in a bearing plane of the motor vehicle (1) on the ground, followed by an operation of changing the reference frame of said initial gage (20) in order to deduce therefrom the shape of an intermediate gage (20') in a plane substantially coinciding with the focal plane of the backup camera (5).

4. Method to assist with the maneuver according to the preceding claim, in which, the focal plane of the backup camera (5) being tilted by a roll angle, a pitch angle and a yaw angle with respect to said bearing plane, said operation of changing the reference frame is performed according to each roll, pitch and yaw angle.

5. Method to assist with the maneuver according to either of the two preceding claims, in which, the backup camera (5) being **characterized by** distortion parameters of the acquired images, the calculation of the dynamic gage (20") comprises a distortion operation for distorting said intermediate gage (20') according to said distortion parameters.

6. Method to assist with the maneuver according to the preceding claim, in which said distortion operation is carried out point by point, for each pixel of the display screen (30).

7. Device to assist with the reversal maneuver of a motor vehicle (1), comprising:

- a means of acquiring a front turning angle ($\alpha_{av}$) relative to the angle of orientation of the steering wheel of the motor vehicle (1),
- a backup camera (5),
- a display screen (30) suitable for displaying images acquired by the backup camera (5), and
- a computer suitable for calculating a dynamic gage (20") representative of the predictable trajectory of the motor vehicle (1), and for displaying said dynamic gage (20") by superimposing the images acquired by the backup camera (5),

**characterized in that** it comprises a means of acquiring the speed (V) of the motor vehicle and **in that** the computer is suitable for implementing a method to assist with the maneuver according to one of the preceding claims.

8. Motor vehicle (1) comprising two front steered wheels (2), two rear steered wheels (4), and a device to assist with the maneuver according to the preceding claim.

**Fig.1**

**Fig.2**

# Fig.3

# Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20010026317 A

- US 2009021396 A